# FASCICULE DE BREVET EUROPEEN

(11) **EP 0 702 801 B1**
(45) Date de publication et mention de la délivrance du brevet: **13.05.1998**
(21) Numéro de dépôt: 94917702.6
(22) Date de dépôt: 01.06.1994
(51) Int. Cl.: G02B 6/44

(54) **CABLE A CONDUCTEURS FINS, NOTAMMENT DES FIBRES OPTIQUES, ET PROCEDE ET DISPOSITIF DE REALISATION D'UN CABLE A CONDUCTEURS FINS**
DÜNNLEITERKABEL,INSBESONDERE OPTISCHE FASERN,HERSTELLUNGSVERFAHREN UND VORRICHTUNG FÜR EIN DIESBEZÜGLICHES KABEL
CABLE WITH THIN LEADS, ESPECIALLY OPTIC FIBRES, AND METHOD AND DEVICE FOR PRODUCING SUCH A CABLE

(30) Priorité: 08.06.1993 FR 9306847
(43) Date de publication de la demande: 27.03.1996
(73) Titulaire: SAT (Société Anonyme de Télécommunications), 75116 Paris (FR)
(72) Inventeur: JAMET, Patrick, F-77130 Marolles-sur-Seine (FR)
(74) Mandataire: Fruchard, Guy
(86) Numéro de dépôt international: FR9400641
(87) Numéro de publication internationale: WO9429759

(56) Documents cités:
- EP-A- 0 160 778
- EP-A- 0 256 248
- EP-A- 0 258 839
- DE-A- 2 730 555
- FR-A- 2 665 266
- GB-A- 2 179 469

## Description

La présente invention concerne un câble à conducteurs fins, notamment des fibres optiques ainsi qu'un procédé et un dispositif de réalisation d'un tel câble à conducteurs fins.

On connaît, notamment du document FR-A-2.665.266 un câble à fibres optiques comportant une série de modules de fibres optiques, chaque module de fibres optiques étant enveloppé par une gaine de maintien disposée en contact avec les fibres optiques pour enserrer celles-ci de façon à réaliser un couplage mécanique entre les fibres. Un tel câble est particulièrement compact mais présente néanmoins normalement des interstices entre les zones de contact des fibres optiques entre elles et avec la gaine de maintien de sorte que ces câbles ne présentent pas naturellement une étanchéité longitudinale, c'est-à-dire que si l'extrémité d'un câble de ce type est plongée dans l'eau celle-ci pénètre progressivement à l'intérieur du câble avec tous les inconvénients que cela peut présenter. Il en serait de même avec un câble de conducteurs électriques fins, par exemple d'un diamètre inférieur à 0,5 mm chacun recouvert d'une gaine primaire et regroupés selon un ou plusieurs modules enveloppés par une gaine de maintien.

Il est bien mentionné dans FR-A-2 665 266 que l'espace entre les fibres à l'intérieur d'une gaine de maintien peut être rempli avec un produit d'étanchéité si on le souhaite, mais aucune précision complémentaire n'est donnée concernant un tel produit d'étanchéité.

Par ailleurs, on sait que pour réaliser un câble présentant une étanchéité longitudinale, il est habituel de disposer entre les conducteurs isolés une graisse chimiquement inerte à l'égard de la gaine primaire des conducteurs et présentant une viscosité suffisamment élevée pour résister à la pénétration de l'eau. En particulier on utilise couramment des graisses silicone ayant une viscosité de 200 000 cPo. Ces graisses sont très satisfaisantes du point de vue de l'étanchéité longitudinale, mais lors d'un dénudage d'une extrémité d'un câble pour son raccordement à un équipement ou à un autre câble, il est nécessaire d'éliminer la graisse. L'élimination de la graisse ne peut être réalisée qu'en utilisant un solvant, ce qui donne lieu à des manipulations au cours desquelles les conducteurs fins tels que des fibres optiques risquent d'être endommagées.

Selon l'invention on prévoit d'enrober les conducteurs fins d'un câble du type décrit dans le document FR-A-2.665.266 d'huile de viscosité comprise entre 100 et 5000 cPo (mPa.s), de préférence entre 1000 et 4000 cPo (mPa.s).

Ainsi, contrairement à ce que l'on aurait pu attendre d'une huile de ce type qui a une viscosité très inférieure aux graisses habituellement utilisées, cette huile ne s'écoule pas à l'extrémité du câble lorsque celui-ci est sectionné, de sorte qu'elle assure une étanchéité longitudinale du câble tandis que par ailleurs son élimination est obtenue lors d'un dénudage du câble par simple essuyage des conducteurs fins au moyen d'un papier absorbant, ce qui facilite considérablement les opérations de connexion du câble selon l'invention.

Selon un autre aspect de l'invention, celle-ci concerne un procédé et un dispositif de réalisation d'un câble à conducteurs fins obtenu par extrusion d'une gaine de maintien autour d'un groupe de conducteurs fins chacun recouverts d'une gaine primaire, consistant à enduire les conducteurs fins d'une huile de viscosité comprise entre 100 cPo et 5000 cPo, de préférence entre 1000 cPo et 4000 cPo, au moyen d'un organe d'application tel qu'un tampon de feutre associé à un organe d'alimentation en huile, en amont de la tête d'extrusion.

D'autres caractéristiques et avantages de l'invention apparaîtront encore à la lecture de la description qui suit d'un mode de réalisation particulier non limitatif de l'invention en relation avec les figures ci-jointes parmi lesquelles :
- la figure 1 est une vue en coupe partielle très agrandie d'un câble à fibres optiques selon l'invention,
- la figure 2 est une illustration schématique d'un dispositif de réalisation du câble à fibres optiques selon l'invention.

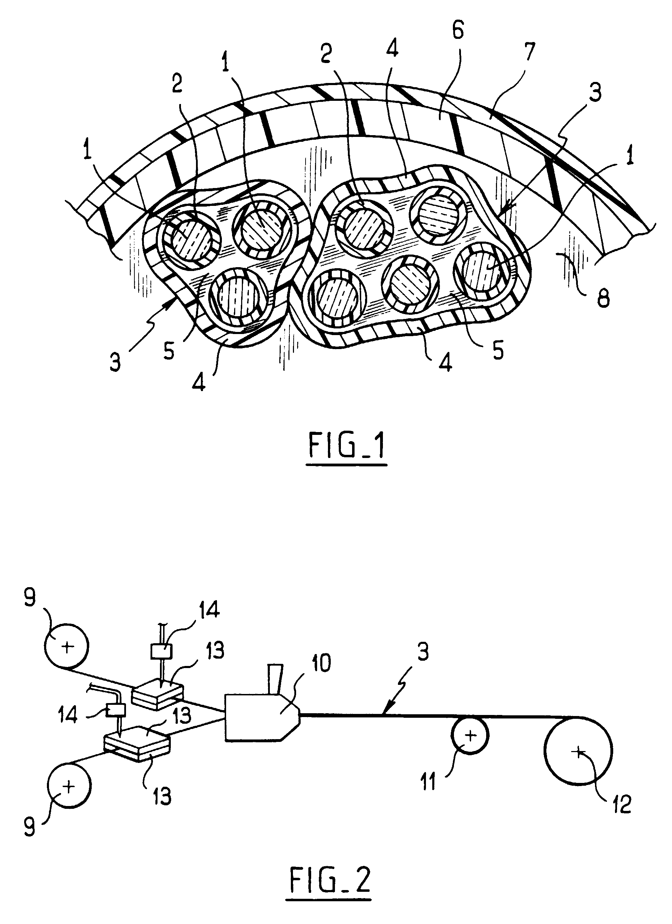

En référence à la figure 1, le câble selon l'invention comporte d'une façon connue en soi, notamment du document FR-A-2.665.266, une série de conducteurs fins, par exemple des fibres optiques 1, chacun revêtu d'une gaine primaire 2. Les fibres optiques 1 sont réparties en modules 3 pouvant comporter un nombre variable de fibres optiques. Chaque module 3 est enveloppé d'une gaine de maintien 4 de faible épaisseur facilement déchirable destinée à maintenir les fibres optiques 1 en contact les unes avec les autres pour assurer un couplage mécanique entre celles-ci.

Selon l'invention, les fibres optiques 1 revêtues de leur gaine primaire 2 sont enrobées dans une huile 5 de viscosité comprise entre 100 cPo et 5000 cPo, de préférence entre 1000 cPo et 4000 cPo. Bien entendu, cette huile doit être inerte par rapport à la gaine primaire des fibres optiques 1, et doit de préférence avoir une viscosité qui varie peu en fonction de la température. Une huile silicone ayant une viscosité de 1000 cPo est particulièrement bien adaptée à la réalisation de l'invention.

On remarquera que la figure 1 est une représentation très agrandie, de sorte que ce qui apparaît comme un espace relativement important entre les fibres optiques est en réalité un espace de très petite dimension dans lequel l'huile est maintenue non seulement en raison de sa viscosité mais également par capillarité. Les forces de capillarité associées à la viscosité maintiennent en outre le couplage mécanique entre les fibres optiques de sorte que l'on réalise ainsi comme précédemment un câble à fibres optiques particulièrement compact et ayant néanmoins une très bonne résistance à la traction.

Par ailleurs, le câble à fibres optiques comporte d'une façon connue en soi une enveloppe avantageusement constituée d'une couche de préférence extrudée 6 en matériau à faible coefficient de dilatation, à faibles effets de relaxation et à forte résistance mécanique donnée par un module d'élasticité élevé, recouverte par une seconde couche 7 dont le rôle est d'assurer la présentation finale du câble, sa résistance à l'abrasion et abaisser son coefficient de frottement pour minimiser les efforts au moment de la pose dans un conduit tubulaire.

Afin de réaliser une étanchéité longitudinale du câble lui-même, les intervalles 8 entre les modules sont de préférences remplis d'une façon connue en soi avec de la poudre gonflante ou des ficelles gonflantes qui peuvent également être éliminées par une manipulation simple lors du dénudage du câble.

La figure 2 illustre de façon schématique tout à la fois le procédé selon l'invention et le dispositif de mise en oeuvre de ce procédé.

D'une façon connue en soi, le dispositif comporte des bobines 9 sur lesquelles sont enroulées les fibres optiques 1 revêtues de leur gaine primaire 2. Pour la réalisation d'un module 3, un nombre correspondant de fibres optiques est déroulé à partir des bobines 9 et les fibres optiques ainsi déroulées sont introduites simultanément dans une tête d'extrusion 10 destinée à réaliser la gaine de maintien 4. A la sortie de la tête d'extrusion 10, le module 3 est entraîné par un organe de traction, par exemple un cabestan 11, puis enroulé sur une bobine réceptrice 12 ou acheminé directement vers un poste de réalisation d'un câble à partir d'une série de postes de réalisation de modules.

Selon l'invention on prévoit d'enduire chaque fibre optique avec une huile à viscosité comprise entre 100 cPo et 5000 cPo préalablement à l'introduction des fibres dans la tête d'extrusion 10 en faisant passer les fibres optiques dans un organe d'application d'huile comportant par exemple des tampons de feutre 13 en contact avec les fibres et convenablement saturés d'huile au moyen d'un dispositif d'alimentation 14 tel qu'un dispositif en goutte à goutte convenablement relié à un réservoir d'huile.

Bien entendu l'invention est susceptible de variantes de réalisation qui apparaîtront à l'homme de métier sans sortir du cadre de l'invention tel que défini par les revendications. En particulier, bien que sur la figure 2 on ait représenté un organe d'application d'huile 13 pour chaque fibre optique, on peut prévoir un organe d'application commun au différents fibres optiques, cet organe d'application étant de préférence accolé à la tête d'extrusion et disposé pour recueillir l'excédent d'huile qui serait amené à refluer vers l'orifice amont de la tête d'extrusion lors de l'application de la gaine de maintien 4. On peut également prévoir d'enrober les fibres optiques avec de l'huile au moyen d'une filière calibrée convenablement disposée dans une enceinte remplie d'huile en amont de la tête d'extrusion 10. On notera à ce propos que l'enrobage des fibres optiques présente l'avantage de lubrifier les outillages d'extrusion et d'éviter un dépôt de l'encre de coloration des fibres optiques dans les outillages d'extrusion, ce qui permet de réaliser de grandes longueurs de modules sans incident et d'utiliser des outillages d'extrusion plus petits et mieux ajustés à la dimension des modules et donc d'étirer de façon moins importante la matière de la gaine de maintien, ce qui a pour conséquence de minimiser les phénomènes de retrait de cette gaine et d'élargir la plage de température de fonctionnement du module obtenu.

Bien que l'invention ait été décrite à propos d'un câble à fibres optiques, elle s'applique également à un câble comportant des conducteurs électriques très fins, par exemple d'un diamètre inférieur à 0,5 mm isolés individuellement par une gaine primaire très fine et regroupés en modules de façon que l'huile puisse remplir les interstices entre les conducteurs et y être maintenue par capillarité.

## Revendications

1. Câble à conducteurs fins (1) comportant au moins un module de conducteurs fins (1) chacun revêtu d'une gaine primaire (2), enveloppés par une gaine de maintien (4) assurant un couplage mécanique des conducteurs fins (1), caractérisé en ce que les conducteurs fins (1) sont enrobés d'une huile (5) de viscosité comprise entre 100 et 5000 Cpo (mPa.s).

2. Câble à fibres optiques selon la revendication 1, caractérisé en ce que la viscosité de l'huile est comprise entre 1000 et 4000 Cpo (mPa.s).

3. Procédé de réalisation d'un câble à conducteurs fins (1) chacun revêtu d'une gaine primaire (2), le procédé comportant des étapes d'introduire plusieurs conducteurs fins simultanément dans une tête d'extrusion en les mettant en contact les uns avec les autres, et d'extruder autour des conducteurs une gaine de maintien assurant un couplage mécanique des conducteurs fins, caractérisé en ce que préalablement à l'introduction dans la tête d'extrusion les conducteurs fins (1) sont enduits avec une huile (5) ayant une viscosité comprise entre 100 et 5000 cPo (mPa.s).

4. Procédé selon la revendication 3, caractérisé en ce que la viscosité de l'huile est comprise entre 1000 et 4000 cPo (mPa.s).

5. Dispositif de réalisation d'un câble à conducteurs fins chacun revêtu d'une gaine primaire (2), ce dispositif comportant une tête d'extrusion (10) pour réaliser une gaine de maintien (4) assurant un couplage mécanique des conducteurs fins, caractérisé en ce qu'en amont de la tête d'extrusion (10) le dispositif comporte un organe d'application (13) d'huile comprenant un réservoir contenant une huile ayant une viscosité comprise entre 100 et 5000 cPo (mPa.s).

6. Dispositif selon la revendication 5, caractérisé en ce que la viscosité de l'huile est comprise entre 1000 et 4000 cPo (mPa.s).

7. Dispositif selon la revendication 5, caractérisé en ce que l'organe d'application (13) comporte au moins un tampon de feutre associé à un organe d'alimentation en huile (14) relié audit réservoir.

## Patentansprüche

1. Dünnleiterkabel umfassend mindestens einen Modul mit dünnen Leitern (1), deren jeder von einem Primärschlauch (2) umgeben ist und die von einem Halteschlauch (4) umhüllt sind, der einen mechanischen Zusammenhalt der dünnen Leiter (1) gewährleistet, dadurch **gekennzeichnet**, daß die dünnen Leiter (1) von einem Öl (5) umgeben sind, dessen Viskosität zwischen 100 und 5000 cPo (mPa.s) beträgt.

2. Kabel mit optischen Fasern nach Anspruch 1, dadurch **gekennzeichnet**, die Viskosität des Öles zwischen 1000 und 4000 cPo (mPa.s) beträgt.

3. Verfahren zur Herstellung eines Dünnleiterkabels, dessen dünne Leiter (1) jeweils von einem Primärschlauch (2) umgeben sind, umfassend die folgenden Schritte:
gleichzeitiges Einführen mehrerer dünner Leiter in einen Extrusionskopf, wobei die Leiter miteinander in Kontakt gebracht werden, und Extrudieren eines Halteschlauches um die Leiter, der einen mechanischen Zusammenhalt der dünnen Leiter gewährleistet, dadurch gekennzeichnet, daß die dünnen Leiter (1) vor ihrem Einführen in den Extrusionskopf mit einem Öl (5) beschichtet werden, dessen Viskosität zwischen 100 und 5000 cPo (mPa.s) beträgt.

4. Verfahren nach Anspruch 3, dadurch **gekennzeichnet,** daß die Viskosität des Öles zwischen 1000 und 4000 cPo (mPa.s) beträgt.

5. Vorrichtung zur Herstellung eines Dünnleiterkabels, dessen dünne Leiter jeweils von einem Primärschlauch (2) umgeben sind, umfassend einen Extrusionskopf (10) zum Erzeugen eines Halteschlauches (4), der einen mechanischen Zusammenhalt der dünnen Leiter gewährleistet, dadurch **gekennzeichnet**, daß die Vorrichtung stromaufwärts des Extrusionskopfes (10) eine Ölauftragseinrichtung (13) mit einem Reservoir hat, das ein Öl mit einer Viskosität zwischen 100 und 5000 cPo (mPa.s) enthält.

6. Vorrichtung nach Anspruch 5, dadurch **gekennzeichnet**, daß die Viskosität des Öles zwischen 1000 und 4000 cPo (mPa.s) beträgt.

7. Vorrichtung nach Anspruch 5, dadurch **gekennzeichnet**, daß die Ölauftragseinrichtung (13) mindestens einen Filzstopfen hat, der mit einem Ölzuführorgan (14) verbunden ist, das seinerseits an das Reservoir angeschlossen ist.

## Claims

1. A cable having fine conductors (1), the cable including at least one module of fine conductors (1) each covered in a primary sheath (2), the conductors being wrapped together in a supporting sheath (4) that couples the fine conductors (1) together mechanically, the cable being characterized in that the fine conductors (1) are coated in an oil (5) of viscosity lying in the range 100 to 5,000 cPo (mPa.s).

2. An optical fiber cable according to claim 1, characterized in that the viscosity of the oil lies in the range 1,000 to 4,000 cPo (mPa.s)

3. A method of making a cable having fine conductors (1) each covered in a primary sheath (2), the method including the steps of inserting a plurality of fine conductors simultaneously in an extrusion head putting them into contact with one another, and extruding a supporting sheath around the conductors to couple the fine conductors together mechanically, the method being characterized in that prior to being inserted in the extrusion head, the fine conductors (1) are coated in an oil (5) having viscosity lying in the range 100 to 5,000 cPo (mPa.s).

4. A method according to claim 3, characterized in that the viscosity of the oil lies in the range 1,000 to 4,000 cPo (mPa.s).

5. Apparatus for making a cable having fine conductors each covered in a primary sheath (2), the apparatus comprising an extrusion head (10) for making a supporting sheath (4) that couples the fine conductors together mechanically, the apparatus being characterized in that upstream from the extrusion head (10) it includes an oil applying member (13) comprising a tank containing an oil having a viscosity lying in the range 100 to 5,000 cPo (mPa.s).

6. Apparatus according to claim 5, characterized in that the viscosity of the oil lies in the range 1,000 to 4,000 cPo (mPa.s).

7. Apparatus according to claim 5, characterized in that the applicator member (13) includes at least one felt pad associated with an oil feed member (14) connected to said tank.
